# EUROPEAN PATENT SPECIFICATION

(11) **EP 1 311 373 B1**
(45) Date of publication and mention of the grant of the patent: **14.04.2010**
(21) Application number: 01972800.5
(22) Date of filing: 20.08.2001
(51) Int. Cl.: B26F 1/14

(54) **PUNCHING APPARATUS, PARTICULARLY SUITABLE FOR FORMING LABELS AND SUCH FOIL ELEMENTS**
STANZVORRICHTUNG INSBESONDERE ZUM STANZEN VON ETIKETTEN UND SONSTIGEN FOLIENELEMENTEN
APPAREIL DE DECOUPAGE, PARTICULIEREMENT ADAPTE POUR FORMER DES ETIQUETTES ET DES ELEMENTS EN FEUILLE DU MEME TYPE

(30) Priority: 21.08.2000 NL 1015973
(43) Date of publication of application: 21.05.2003
(73) Proprietor: I-Pac Patents B.V., 2909 LC Capelle a/d IJssel (NL)
(72) Inventor: ALBERTS, Petrus, Antonius, Johannes, NL-7255 BV Hengelo (NL)
(74) Representative: Prins, Adrianus Willem
(86) International application number: PCT/NL2001/000612
(87) International publication number: WO 2002/016093

(56) References cited:
- GB-A- 2 184 086
- US-A- 4 077 185
- US-A- 4 129 054
- US-A- 5 025 691

## Description

The invention relates to a punching apparatus, particularly suitable for forming labels and such foil elements. Such a punching apparatus is known from practice.

This known punching apparatus comprises a punch and a punching table. The punch comprises a punching edge, and the punching table comprises a complementary punching opening. The punch is provided with a punching plate, which is provided at its longitudinal edge with a guide block in at least four spaced positions. Each guide block comprises a cylindrical opening, through which a guide bar extends. The at least four guide bars extend parallel to each other and are fixed with their ends, on the one hand in the punching table, and on the other hand in a frame part. This results in a relatively rigid construction. The guide plate can be moved by means of hydraulic means such that the punching edge can be fittingly moved in the punching opening, guided by the guide blocks, so that a label can be punched out of a foil strip passed between the punching edge and the punching opening.

US 5 025 691 discloses a punching apparatus having a punch guide which, seen in direction of movement of the punch, surrounds the punch at some distance. The guide extends into an aperture in a stripper plate which extends substantially around the aperture. At the end remote from the punch the guide is supported on a base plate which extends outside said guide in at least two directions. Onto opposite sides of the guide springs are provided between said base plate and said stripper plate, further guiding the punch and biasing the stripper plate away from the base plate. With such punch openings can be provided in relatively thick products, preventing excessive wear and deformations in the punching apparatus-However, such punching apparatus is still relatively large with respect to the surface enclosed within the punching edge.

This known punching apparatus has the drawback that it has a relatively complex structure and, seen at right angles to the direction of movement of the punch, has a very large outer contour. This means that such a punching apparatus requires a relatively large mounting surface.

The invention has for its object to provide a punching apparatus of the type described in the opening paragraph, in which the above drawbacks are avoided, with retention of the advantages thereof. To this end, a punching apparatus according to the invention is characterized by the measures according to claim 1.

In an apparatus according to the invention, the punching edge is directly supported by a guide part of the punch, which is guided by at least one guide element. This has the advantage that a substantially less complex punching apparatus is obtained, which, moreover, can be of more compact construction.

In a first advantageous embodiment, a punching apparatus according to the invention is further characterized by the measures according to claim 2.

In such an embodiment, the outside dimensions of the punching apparatus, seen at right angles to the direction of movement of the punch, is only defined by the punching table, since the or each guide element is located within the outer contour of the punching table. It is preferred that the or each guide element, in a plane at right angles to the direction of movement of the punch, is located within the outer contour of the punching edge. This results in an even more compact structure.

In a further advantageous embodiment, a punching apparatus according to the invention is further characterized by the measures according to claim 4.

In such an embodiment, the guide part and the or each guide element may be in direct contact for the formation of a sliding fit.

In a punching apparatus according to the invention, the guide element can be of substantially tubular design, built up from one or more parts, the guide part being movable within the above tubular part with a sliding fit. This results in a very simple and compact guide. Also, precisely the guide part may comprise a tubular part in which the or each guide element extends with a sliding fit. It is preferred that the or each guide element extends via an open end in the above guide part.

In a further advantageous embodiment, a punching apparatus according to the invention is characterized by the measures according to claim 7.

The widened head offers the space for positioning the punching edge, the or each guide element being able to be arranged simply around at least part of the further guide part, substantially within the outer contour of the above head. In such an embodiment, the above guide element may be of, for instance, tubular design, as described above.

A first and a second punching plate may be provided on respectively the punch and the punching table, with complementary punching edges. Such first and second punching plates may be simply exchangeable, for instance in order that they can be ground or replaced. The form of the labels to be cut out may be simply fixed in the first and the second punching plate, so that they are to be exchanged only if a change to another form is effected.

It is preferred that within a punching apparatus according to the invention a punching table has an outer contour, in a plane at right angles to the direction of movement, which surrounds the punching opening at only a slight distance. Preferably, the minimum distance between the outer contour of the punching table (which, for instance, may be of rectangular design) and the nearby contour of the punching opening is about 20 mm or less. This considerably limits installation dimensions for the relevant punching table.

In a further advantageous embodiment, a punching apparatus according to the invention is further characterized by the measures according to claim 17.

With such a punching apparatus, several labels or such foil elements can be simply punched out simultaneously. As a result of the compact structure, in particular the small outside dimensions of the punching tables and the punches with guide elements, at right angles to the direction of movement, the punching openings can be placed side by side with a relatively small intermediate distance and can be positioned independently of each other, so that the foil elements can likewise be punched out with a small mutual distance. This has the advantage of relatively little waste material, while the relevant foil elements can be simply transferred to, for instance, mold cavities of a multiple mold, which mold cavities can then be placed relatively closely together without requiring adaptation of the distance between the labels prior to placement. This has the advantage that a multiple mold can be used for, for instance, the manufacture of in-mold-labeled injections moldings with a relatively small mating surface.

It is preferred that in or near each punching opening receiving means are provided for gripping a foil element punched out in the relevant punching opening, so that this can be simply removed and brought into, or kept in, the desired form, for instance for transfer to a further tool part.

In an advantageous embodiment, a punching apparatus according to the invention has such an arrangement that the or each punch has a substantially horizontal direction of movement. Such an apparatus has the advantage that during use with molds with vertically extending mating surfaces the transfer of the foil elements from the punching openings to the relevant mold cavities is substantially simplified.

The invention further relates to a manufacturing apparatus for products characterized by the measures according to claim 23.

With such a manufacturing apparatus, products can be formed very rapidly, that is to say with short cycle times, while using punched foil elements, the foil elements being able to be placed in or on the relevant tool part in a very simple manner. Since the position of the punched labels corresponds to that in which they are to be placed on or in the relevant tool part, an intermediate change of position is not necessary. As a result, complicated transferring apparatuses are superfluous.

The invention further relates to a punch, suitable and intended for use in a punching apparatus of manufacturing apparatus according to the invention.

In a very advantageous embodiment, such a punch is characterized by the measures according to claim 22.

In such an embodiment, the advantage is obtained that all kinds of different punching edges, at least punching plates with such punching edges, can be used with a punch, without the need of using guide parts and guide elements of another form. This results in a universal punch, which can be simply adjusted to different forms of foil elements to be formed and different materials from which they are to be punched.

In the further subclaims are defined further advantageous embodiments of a punching apparatus, manufacturing apparatus and punch according to the invention.

In explanation of the invention, exemplary embodiments of a punching apparatus, manufacturing apparatus and punch according to the invention will be explained in more detail with reference to the drawing, in which:
Fig. 1 diagrammatically shows, in cross-sectional view along the line I- I in Fig. 2, a punching apparatus;
Fig. 2 shows, in top plan view, a punching apparatus of Fig. 1, as part of a diagrammatically represented part of a manufacturing apparatus ;
Fig. 3 diagrammatically shows, in partially cross-sectional side elevation, comparable to that in Fig. 1, an alternative embodiment of a punch with guide element;
Fig. 4 diagrammatically shows, in cross-sectional side elevation, a manufacturing apparatus according to the invention; and
Fig. 5 diagrammatically shows, in cross-sectional side elevation, comparable to that in Fig. 1, a further alternative embodiment of a punch with guide element.

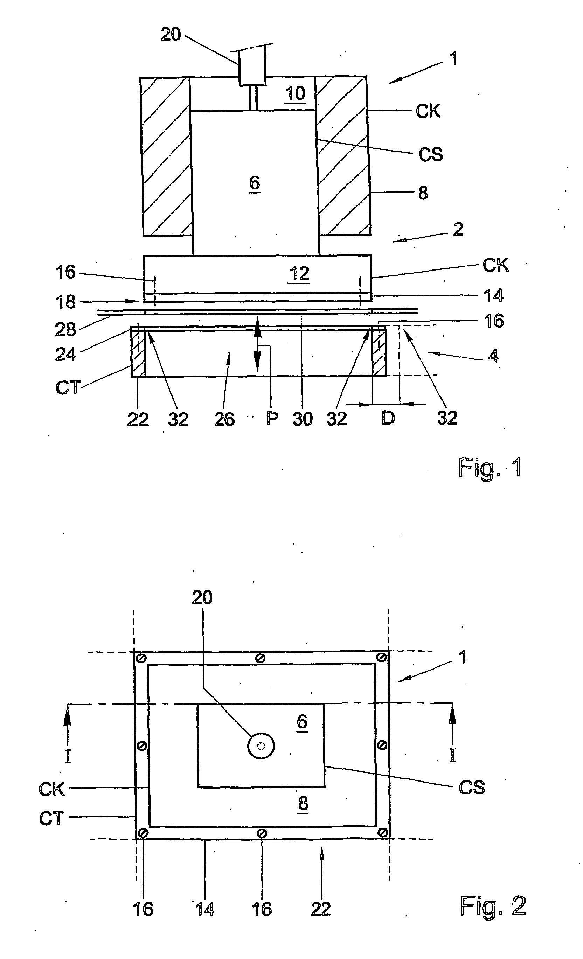

In Fig. 1 is shown a punching apparatus 1 in partially cross-sectional side elevation. This punching apparatus 1 comprises a punch 2 and a punching table 4. The punch 2 comprises a guide part 6, which is substantially of solid design, for instance in metal such as steel, with a, in top plan view, that is to say at right angles to a direction of movement P of the punch 2, substantially rectangular contour CS. Provided around the guide part 6 is a tubular guide element 8 with a continuous opening 10, in which the guide part 6 is fittingly received with a sliding fit and is movable therein in the above direction of movement P. The guide part 6 and/or the wall parts of the opening 10 of the guide element 8 in contact therewith are preferably provided with a friction-reducing coating, for instance a Teflon (PTFE)-based coating, so that movement is possible, and remains possible for a long time, without damage, wear or jamming, and without excessive forces.

Mounted to a first, in Fig. 1 lower, end of the guide part 6 is a head 12, for instance by welding or screwing, or formed integral therewith, which head 12 has an outer contour CK, which surrounds the outer contour CS of the guide part 6 at some distance. The outer contour CK of the head 12 is, for instance, approximately equal to that of the guide element 8. At the side of the head 12 remote from the guide part 6, a first punching plate 14 is fixed to the head 12, for instance with screws 16, so that the punching plate 14 is exchangeable for another first punching plate. The first punching plate 14 defines, along its outer circumference, a punching edge 18, which can be simply ground, preferably when the punching plate 14 has been detached.

Near the superjacent second end, the guide part 6 is connected with an operating mechanism, symbolically represented by a piston-cylinder assembly 20, with which the punch 2 is movable.

The punching table 4 is substantially formed by an edge 22, which is provided at the side directed towards the punch 2 with a second punching plate 24, likewise fixed with screws 16 or the like, so as to be simply exchangeable for another second punching plate. The first and the second punching plate 14, 24 are preferably manufactured from thin sheet material and can be recycled. The punching table 4, at least the second punching plate 24, defines a punching opening 26, which has a form complementary to that of the punching edge 18 of the first punching plate 14, for punching cooperation therewith. The edge 22 has, measured at right angles to the direction of movement P of the punch 2, a small dimension, for instance 10 to 20 mm or less. The purpose thereof will be explained lower down.

In Fig. 1 is shown, between the first 14 and the second punching plate 24, a foil strip 28. The punch 2 is located at a first side thereof, the punching opening 26 at the opposite side. By moving the first punching plate 14 with the punch 2 through the foil strip 28 into the punching opening 26, a label 30 is punched out, which can be removed in the punching opening.

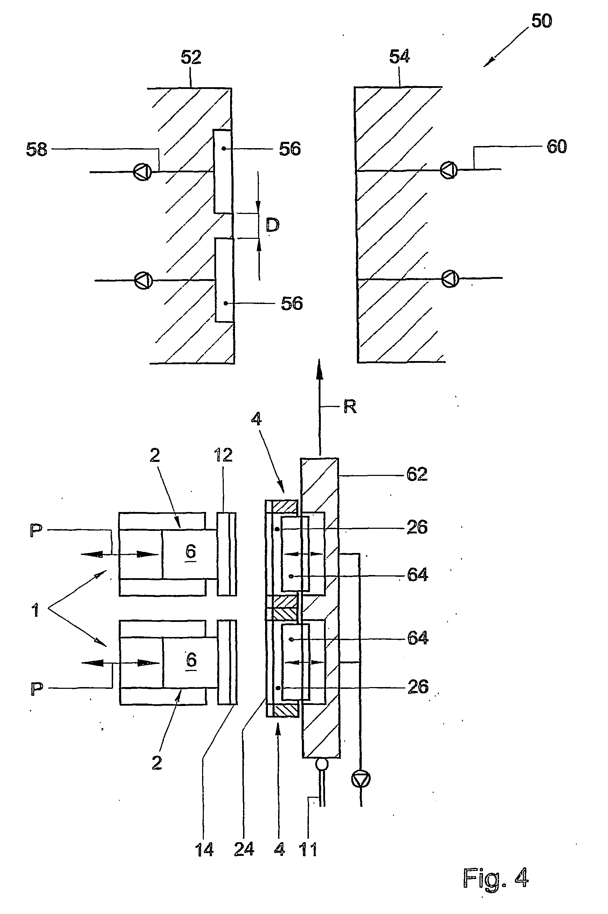

As clearly shown in Fig. 2, the whole punch 2 extends, in top plan view, within the outer contour CT of the punching table 4, like the punching edge 18 of the first punching plate 14 and the guide element 6. As, for instance, shown in Figs. 1 and 4, punching apparatuses 1, in particular punching tables 4, can thus be moved closely together, so that the distance D between the cutting edges 32 of two juxtaposed punching openings 28 is defined by twice the thickness of the edge 22, that is to say for instance 20 to 40 mm. This ensures that labels can be punched out of foil strips 28 closely together and be transferred to tool parts such as mold cavities, as will be explained lower down.

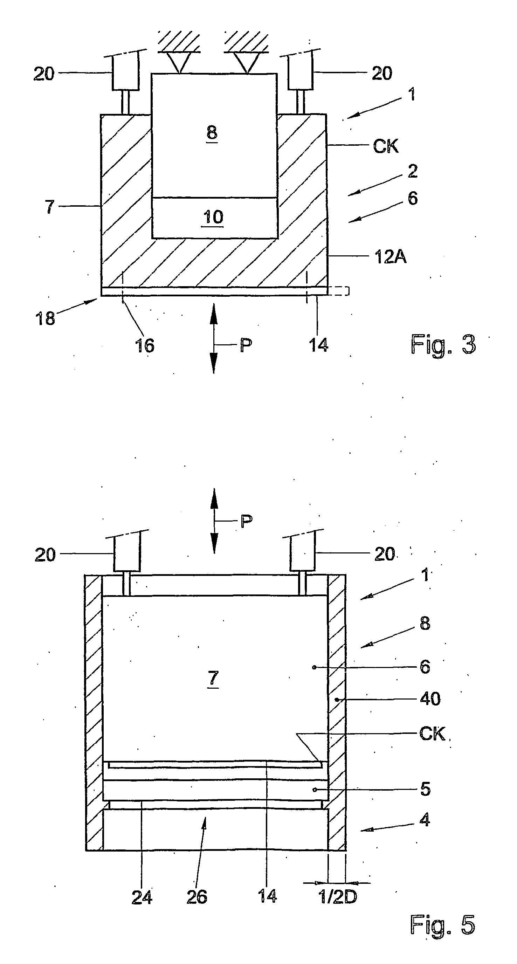

In Fig. 3 is shown, in diagrammatic cross-section, an alternative embodiment of a punching apparatus 1, at least a punch 2. In this embodiment, the guide part 6 comprises a tubular part 7, within which a block-shaped guide element 8 is received with a sliding fit. Movement means 20 are provided for moving the punch 7 along the guide element 8 in the direction of movement P. In this embodiment, the punch 7 has a substantially U-shaped cross-section, the first punching plate 14 being fixed to the horizontal part 12A of the relevant U. Again, guide element 8 and/or guide part 6 are provided with a friction-reducing coating. As shown in Fig. 3 at the right-hand side, the first punching plate 14 may also extend outside the outer contour CK of the punch 7.

In Fig. 5 is shown a further alternative embodiment of a punching apparatus 1, the guide part 8 and the punching table 4 being interconnected and preferably formed integral as a substantially tubular profile 40. At two opposite sides, openings 5 are provided above the punching table 4 for passing foil strips. The punch 7 is of block-shaped design and received within the profile 40 with a sliding fit, movable in the direction P by means of the means 20. Here the relevant block also forms the guide part 6. Mounted to a first lower end of the punch 7 is a first punching plate 14, the outer contour CK of which is a little smaller than the outer contour of the guide part 6. An edge is provided for the formation of the second cutting plate 24, at least the punching opening 26, qua form complementary to the first punching plate 14. The thickness of the wall of the tubular profile 40 is relatively small, for instance a 1/2D, so that two profiles 40 moved together result in a common wall thickness D, as shown in Fig. 1.

In Fig. 4 is shown, in diagrammatic cross-section, a multiple injection mold 50, which comprises a first mold half 52 and a second mold half 54. Provided in the first mold half 52 are two mold cavities 56, provided with diagrammatically represented vacuum means 58 in the bottom, for gripping labels 30. Provided in the second mold half 54 are feeding means 60 for feeding plastic into the mold cavity. Two punching apparatuses 1 are shown side by side, with parallel, substantially horizontally oriented directions of movement P for the punches 2. The associated punching tables 4 are arranged so as to be able to cooperate with the punches 2. To simplify matters, the movement means 20 and the foil strips 28 are left out here. Provided at the side of the second punching plates 24 remote from the punches 2 is a transferring apparatus 62, movable by means of an arm 11, which transferring apparatus 62 is provided with receiving means 64, which can be moved into juxtaposed punching openings 26, for gripping labels 30 formed therein. Such a receiving and transferring apparatus is described in the international patent application filed on the same day, entitled: "punching apparatus, particularly suitable for forming labels and such foil elements" from the same applicant. The receiving means 64 are, for instance, vacuum controlled. As shown in Fig. 4, the mutual distance between the receiving means 64 is equal to the mutual distance between the cavities 56. Labels 30 formed with the punching apparatuses 1 can therefore be directly placed in the cavity 56 without a mutual change of position, following which, after removing the transferring apparatus 62, which is movable in the direction R between the mold halves 52, 54, the mold is closed to form in-mold-labeled products. As a result, molds 50 with relatively small mating surfaces become possible, and relatively short cycle times can be obtained.

As appears from the drawing, punching apparatuses 1 according to the invention may comprise both horizontally and vertically moving punches 2. It will be clear that other angles to the horizontal are possible as well.

In the exemplary embodiments shown, each punching plate 14, 24 has a substantially rectangular form. It will be clear, however, that they may also have a form different therefrom. The guide parts preferably have a non-rotation-symmetric outer contour, so that movement thereof is only possible in the direction of movement P, while rotations and other translations can be simply prevented. As long as the punching plates 14, 24 have an outer contour within which the outer contour of the punch falls, very efficient use is made of available space.

It will be clear that the invention is in no way limited to the exemplary embodiments described in the specification and shown in the examples. Many variations thereof are possible within the scope of the invention defined by the claims.

Thus, guide parts and guide elements may be of different construction, for instance built up from several parts, and of, for instance, completely or partly hollow design. The guide elements need not define a completely closed form, but may also contain profiles extending within the contour of the punching edges. By way of alternative for, for instance, the embodiment shown in Fig: 3, four instance several guide elements may be received in the guide part with sliding fits. For the guide elements and guide parts, any desired material may be selected. Also, the edge 22 and the punch 2 may be directly provided with punching edges 18, 32, instead of the punching plates.

These and many comparable variations are deemed to fall within the scope of the invention defined by the claims.

## Claims

1. A punching apparatus (1) with a punch (2), provided with a guide part (6), guided in at least one guide element (8), the guide part (6) supporting a punching edge (18) near a first end, leading in the direction of movement of the punch (2), wherein a punching table (4) is provided with a punching opening (26), complementary in form to the punching edge (18), such that with the punching edge (18) and the punching opening (26) a foil element (30) can be punched out of a foil strip (28), **characterized in that** during use at the side of a foil strip (28) remote from the punch (2), in particular in or near the punching opening (26) belonging to the relevant punch (2), receiving means are provided for gripping the foil element punched or to be punched out of the foil strip.

2. A punching apparatus according to claim 1, wherein the or each guide element (8), seen in a view at right angles to the direction of movement of the punch (2), is located within the outer contour of the punching table (4).

3. A punching apparatus according to claim 1, wherein the or each guide element (8), seen in a view at right angles to the direction of movement of the punch (2), is located within the outer contour of the punching edge (18).

4. A punching apparatus according to any one of the preceding claims, wherein the or each guide element (8) and/or the or each guide part (6) are provided with a friction-reducing coating.

5. A punching apparatus according to any one of the preceding claims, wherein the guide element (8) is of substantially tubular design, provided with an opening (10) in which the guide part (6) is received with a sliding fit.

6. A punching apparatus according to any one of claims 1- 4, wherein the guide part (6) comprises a tubular part, preferably open towards the second end remote from the first end, in which a guide element (8) extends in the above tubular part with a sliding fit.

7. A punching apparatus according to any one of the preceding claims, wherein the guide part (6), near the first end, comprises a widened head, which head supports the punching edge (18).

8. A punching apparatus according to claim 7, wherein, seen in a plane at right angles to the direction of movement of the punch (2), the or each guide element (8) is located within the contour (CK) of the head (12).

9. A punching apparatus according to any one of the preceding claims, wherein the guide part (6) comprises, at least supports, a first punching plate (14), which defines the punching edge (18).

10. A punching apparatus according to claim 9, wherein the first punching plate (14) is exchangeable for another first punching plate (14).

11. A punching apparatus according to any one of the preceding claims, wherein the punching table (4) comprises a second punching plate (24), which defines the punching opening (26).

12. A punching apparatus according to claim 11, wherein the second punching plate (24) is exchangeable for another second punching plate (24).

13. A punching apparatus according to any one of the preceding claims, wherein the guide part (6) is of substantially solid design.

14. A punching apparatus according to any one of the preceding claims, wherein the or each guide element (8) is of substantially solid design.

15. A punching apparatus according to any one of the preceding claims, wherein the punching table (24), parallel to the plane of the punching opening (26), has an outer contour which surrounds the contour of the punching opening (24) at a small distance, in particular at a distance of at most 20 mm, more in particular less than 15 mm, and preferably at most 10 mm.

16. A punching apparatus according to any one of the preceding claims, wherein the guide part (6) has a cross-section, seen at right angles to the direction of movement of the punch (2), which is not rotation-symmetric, such that the punch (2) can move within the or each guide element (8) only in the above direction of movement.

17. A punching apparatus according to any one of the preceding claims, wherein at least two punches (2) are provided, placed side by side with parallel directions of movement (P).

18. A punching apparatus according to claim 1, wherein for each punch (2) an associated punching table (24) with punching opening (26) is provided, the punching tables (24) and punches (2) being individually adjustable, at least in a plane at right angles to the directions of movement (P).

19. A punching apparatus according to claim 1, wherein the receiving means (64) are received in a robot, the gripped foil elements (30) being movable away from the punch (2), in particular out of the punching opening (26), preferably for placement in or on a tool part (56) for further processing, in particular a mold, such as an injection mold.

20. A punching apparatus according to any one of the preceding claims, wherein the or each punch (2) is arranged such that it has a substantially horizontal direction of movement.

21. A punching apparatus according to anyone of claims 1-20, wherein the or each guide element (8), at right angles to the direction of movement (P), has a substantially rectangular cross-section, the punching edge (18) having a contour different therefrom, such that the above cross-section completely falls within the above contour.

22. A punching apparatus according to claim 21, wherein the above contour has a form different from a rectangle.

23. A manufacturing apparatus for products, comprising a multiple tool part for simultaneously forming, at least processing, a series of products, and a punching apparatus (1) according to any one of claims 17 - 20, the punches (2) being arranged with respect to each other such that the position of foil elements (30) cut out during use corresponds to the position in which they are to be placed on or in the tool part (56).

24. A manufacturing apparatus according to claim 23, wherein the tool part (56) is a mold part of a multiple injection mold, the apparatus (1) being of such design that during use the labels (30) can be transferred from the respective punching openings (26) to the different mold cavities (56) without mutual change of position, prior to the formation therein of a series of in-mold-labeled products.

## Patentansprüche

1. Stanzvorrichtung (1) mit einer Stanze (2), die mit einem Führungsteil (6) versehen ist, geführt in wenigstens einem Führungselement (8),
wobei das Führungsteil (6) benachbart zu einem ersten Ende eine Stempelschneide (18) trägt, die in die Richtung der Bewegung der Stanze (2) zeigt, wobei eine Stanztafel (4) mit einer Stanzöffnung (26) versehen ist, die in der Form zur Stempelschneide (18) derart komplementär ist,
dass mit der Stempelschneide (18) und der Stanzöffnung (26) ein Folienelement (30) aus einem Folienstreifen (28) herausgestanzt werden kann,
**dadurch gekennzeichnet,**
**dass** während des Gebrauchs an einer von der Stanze (2) abgewandten Seite eines Folienstreifens (28), insbesondere in oder benachbart zu der zur relevanten Stanze (2) gehörenden Stanzöffnung (26), eine Aufnahmeeinrichtung zum Ergreifen des Folienelementes, welches aus dem Folienstreifen gestanzt ist oder gestanzt werden soll, vorgesehen ist.

2. Stanzvorrichtung nach Anspruch 1,
in welcher das oder jedes Führungselement (8) gesehen in einem Bild in einem rechten Winkel zur Richtung der Bewegung der Stanze (2) innerhalb der äußeren Kontur der Stanztafel (4) angeordnet ist.

3. Stanzvorrichtung nach Anspruch 1,
in welcher das oder jedes Führungselement (8) gesehen in einem Bild in einem rechten Winkel zur Richtung der Bewegung der Stanze (2), innerhalb der äußeren Kontur der Stempelschneide (18) angeordnet ist.

4. Stanzvorrichtung nach einem der vorstehenden Ansprüche,
in welcher das oder jedes Führungselement (8) und/oder das oder jedes Führungsteil (6) mit einer reibungsreduzierenden Beschichtung versehen ist.

5. Stanzvorrichtung nach einem der vorstehenden Ansprüche,
in welcher das Führungselement (8) von einem im Wesentlichen rohrfömigen Aufbau ist, versehen mit einer Öffnung (10), in welcher das Führungsteil (6) mit einem Gleitsitz aufgenommen ist.

6. Stanzvorrichtung nach einem der Ansprüche 1 bis 4,
in welcher das Führungsteil (6) ein rohrförmiges Teil aufweist, vorzugsweise in Richtung zu einem zweiten von dem ersten Ende abgewandten Ende geöffnet, in welchem ein Führungselement (8) sich in diesem rohrförmigen Teil mit einem Gleitsitz erstreckt.

7. Stanzvorrichtung nach einem der vorstehenden Ansprüche,
in welchem das Führungsteil (6) benachbart zu dem ersten Ende einen erweiterten Kopf aufweist, welcher Kopf die Stempelschneide (18) trägt.

8. Stanzvorrichtung nach Anspruch 7,
in welcher betrachtet in einer Ebene im rechten Winkel zur Richtung der Bewegung der Stanze (2) das oder jedes Führungselement (8) innerhalb der Kontur (CK) des Kopfes (12) angeordnet ist.

9. Stanzvorrichtung nach einem der vorstehenden Ansprüche,
in welchem das Führungsteil (6) eine erste Stanzplatte (14) aufweist oder zumindest trägt, welche die Stempelschneide (18) definiert.

10. Stanzvorrichtung nach Anspruch 9,
in welcher die erste Stanzplatte (14) gegen eine andere erste Stanzplatte (14) austauschbar ist.

11. Stanzvorrichtung nach einem der vorstehenden Ansprüche,
in welcher die Stanztafel (4) eine zweite Stanzplatte (24) aufweist, welche die Stanzöffnung (26) definiert.

12. Stanzvorrichtung nach Anspruch 11,
in welcher die zweite Stanzplatte (24) gegen eine andere zweite Stanzplatte (24) austauschbar ist.

13. Stanzvorrichtung nach einem der vorstehenden Ansprüche,
in welcher das Führungsteil (6) aus einem im Wesentlichen festen Aufbau besteht.

14. Stanzvorrichtung nach einem der vorstehenden Ansprüche,
in welchem das oder jedes Führungselement (8) aus einem im Wesentlichen festen Aufbau besteht.

15. Stanzvorrichtung nach einem der vorstehenden Ansprüche,
in welcher die Stanztafel (24) parallel zur der Ebene der Stanzöffnung (26) eine äußere Kontur besitzt, welche die Kontur der Stanzöffnung (24) in einem kleinen Abstand umgibt, insbesondere in einem Abstand von höchstens 20 mm, insbesondere von weniger als 15 mm, und bevorzugt von höchstens 10 mm.

16. Stanzvorrichtung nach einem der vorstehenden Ansprüche,
in welcher das Führungsteil (6) einen Querschnitt im rechten Winkel zur Richtung der Bewegung der Stanze (2) besitzt, welcher nicht rotationssymmetrisch ist, sodass die Stanze (2) sich innerhalb des oder jedes Führungselementes (8) nur in die oben genannte Richtung der Bewegung bewegen kann.

17. Stanzvorrichtung nach einem der vorstehenden Ansprüche,
in welchem zumindest zwei Stanzen (2) vorgesehen sind, die nebeneinander mit parallelen Richtungen der Bewegung (P) angeordnet sind.

18. Stanzvorrichtung nach Anspruch 1,
in welcher für jede Stanze (2) eine zugehörige Stanztafel (24) mit einer Stanzöffnung (26) vorgesehen ist, wobei die Stanztafeln (24) und Stanzen (2), zumindest in einer Ebene im rechten Winkel zur Richtung der Bewegung (P) individuell justierbar sind.

19. Stanzvorrichtung nach Anspruch 1,
in welcher die Aufnahmeeinrichtung (64) in einem Automaten aufgenommen ist, wobei die ergriffenen Folienelemente (30) von der Stanze (2) weg beweglich sind, insbesondere aus der Stanzöffnung (26) heraus, vorzugsweise für eine Platzierung in oder an einem Werkzeugteil (56) für weitere Verarbeitung, insbesondere in einer Form, wie beispielsweise in einer Spritzgussform.

20. Stanzvorrichtung nach einem der vorstehenden Ansprüche,
in welcher die oder jede Stanze (2) so angeordnet ist, dass sie eine im wesentlichen horizontale Richtung der Bewegung besitzt.

21. Stanzvorrichtung nach einem der Ansprüche 1 bis 20,
in welcher das oder jedes Führungselement (8) einen im Wesentlichen rechtwinkligen Querschnitt im rechten Winkel zur Richtung der Bewegung (P) besitzt, wobei die Stempelschneide (18) eine davon unterschiedliche Kontur besitzt, derart, dass der oben genannte Querschnitt vollständig in die genannte Kontur fällt.

22. Stanzvorrichtung nach Anspruch 21,
in welcher die oben genannte Kontur eine andere Form als die eines Rechtecks besitzt.

23. Herstellvorrichtung für Erzeugnisse, aufweisend ein Mehrfachwerkzeugteil für das gleichzeitige Formen oder zumindest Verarbeiten einer Reihe von Erzeugnissen, und eine Stanzvorrichtung (1) nach einem der Ansprüche 17 bis 20,
wobei die Stanzen (2) in Bezug zueinander so angeordnet sind, dass die Position von Folienelementen (30), die während des Gebrauchs herausgeschnitten werden, der Position entspricht, in welcher diese auf oder in dem Werkzeugteil (56) platziert werden sollen.

24. Herstellvorichtung nach Anspruch 23,
in welcher das Werkzeugteil (56) ein Formteil einer Mehrfachspritzgussform ist, wobei die Vorrichtung (1) von einem derartigen Aufbau ist, dass während des Gebrauchs die Etiketten (30) aus den entsprechenden Stanzöffnungen (26) zu unterschiedlichen Formausnehmungen (56) ohne einen gegenseitigen Wechsel der Position überführt werden können, bevor darin eine Reihe von in der Form etikettierten Erzeugnissen gebildet werden.

## Revendications

1. Appareil de découpage (1) avec un poinçon (2), muni d'une partie de guidage (6), guidée dans au moins un élément de guidage (8), la partie de guidage (6) supportant un bord de découpage (18) à proximité d'une première extrémité, menant dans la direction de déplacement du poinçon (2), dans lequel une table de découpage (4) est munie d'une ouverture de découpage (26) de forme complémentaire à celle du bord de découpage (18), de sorte qu'avec le bord de découpage (18) et l'ouverture de découpage (26), un élément en feuille (30) puisse être découpé dans une bande en feuille (28), **caractérisé en ce que**, en cours d'utilisation, sur le côté d'une bande en feuille (28) distant du poinçon (2), en particulier à l'intérieur ou à proximité de l'ouverture de découpage (26) appartenant au poinçon concerné (2), des moyens de réception sont prévus pour saisir l'élément en feuille découpé ou à découper dans la bande en feuille.

2. Appareil de découpage selon la revendication 1, dans lequel l'élément de guidage (8) ou chacun d'entre eux, vu perpendiculairement à la direction de déplacement du poinçon (2), est situé à l'intérieur du contour externe de la table de découpage (4).

3. Appareil de découpage selon la revendication 1, dans lequel l'élément de guidage (8) ou chacun d'entre eux, vu perpendiculairement à la direction de déplacement du poinçon (2), est situé à l'intérieur du contour externe du bord de découpage (18).

4. Appareil de découpage selon l'une quelconque des revendications précédentes, dans lequel l'élément de guidage (8) ou chacun d'entre eux et/ou la partie de guidage (6) ou chacune d'entre elles sont munis d'un revêtement réducteur de frottement.

5. Appareil de découpage selon l'une quelconque des revendications précédentes, dans lequel l'élément de guidage (8) a une conception sensiblement tubulaire munie d'une ouverture (10), dans laquelle la partie de guidage (6) est reçue avec un ajustement glissant.

6. Appareil de découpage selon l'une quelconque des revendications 1 à 4, dans lequel la partie de guidage (6) comprend une partie tubulaire, de préférence ouverte vers la seconde extrémité distante de la première extrémité, dans lequel un élément de guidage (8) s'étend dans la partie tubulaire précitée avec un ajustement glissant.

7. Appareil de découpage selon l'une quelconque des revendications précédentes, dans lequel la partie de guidage (6) comprend, à proximité de la première extrémité, une tête élargie, laquelle tête supporte le bord de découpage (18).

8. Appareil de découpage selon la revendication 7, dans lequel, vu en plan perpendiculaire à la direction de déplacement du poinçon (2), l'élément de guidage (8) ou chacun d'entre eux est situé à l'intérieur du contour (CK) de la tête (12).

9. Appareil de découpage selon l'une quelconque des revendications précédentes, dans lequel la partie de guidage (6) comprend, au moins supporte, une première plaque de découpage (14) qui définit le bord de découpage (18).

10. Appareil de découpage selon la revendication 9, dans lequel la première plaque de découpage (14) peut être échangée par une autre première plaque de découpage (14).

11. Appareil de découpage selon l'une quelconque des revendications précédentes, dans lequel la table de découpage (4) comprend une seconde plaque de découpage (24), qui définit l'ouverture de découpage (26).

12. Appareil de découpage selon la revendication 11, dans lequel la seconde plaque de découpage (24) peut être échangée par une autre seconde plaque de découpage (24).

13. Appareil de découpage selon l'une quelconque des revendications précédentes, dans lequel la partie de guidage (6) est de conception sensiblement pleine.

14. Appareil de découpage selon l'une quelconque des revendications précédentes, dans lequel l'élément de guidage (8) ou chacun d'entre eux est de conception sensiblement pleine.

15. Appareil de découpage selon l'une quelconque des revendications précédentes, dans lequel la table de découpage (24), parallèle au plan de l'ouverture de découpage (26), a un contour externe qui entoure le contour de l'ouverture de découpage (24) à courte distance, en particulier à une distance de 20 mm au maximum, plus particulièrement à une distance inférieure à 15 mm, de préférence de 10 mm au maximum.

16. Appareil de découpage selon l'une quelconque des revendications précédentes, dans lequel la partie de guidage (6) a une coupe transversale, vue perpendiculairement à la direction de déplacement du poinçon (2), qui n'est pas symétrique en rotation, de sorte que le poinçon (2) puisse se déplacer à l'intérieur de l'élément de guidage (8) ou de chacun d'entre eux, uniquement dans la direction de déplacement précitée.

17. Appareil de découpage selon l'une quelconque des revendications précédentes, dans lequel au moins deux poinçons (2) sont aménagés, placés côte à côte avec des directions de déplacement parallèles (P).

18. Appareil de découpage selon la revendication 1, dans lequel pour chaque poinçon (2), est aménagée une table de découpage associée (24) avec une ouverture de découpage (26), les tables de découpage (24) et les poinçons (2) pouvant être ajustés individuellement, au moins dans un plan perpendiculaire aux directions de déplacement (P) ;

19. Appareil de découpage selon la revendication 1, dans lequel les moyens de réception (64) sont reçus dans un robot, les éléments en feuille saisis (30) pouvant être déplacés hors du poinçon (2), en particulier hors de l'ouverture de découpage (26), de préférence pour être placés dans ou sur une partie d'outil (56) pour un autre traitement, en particulier un moule, tel qu'un moule à injection.

20. Appareil de découpage selon l'une quelconque des revendications précédentes, dans lequel le mandrin (2) ou chacun d'entre eux est aménagé de manière à avoir une direction de déplacement sensiblement horizontale.

21. Appareil de découpage selon l'une quelconque des revendications 1 à 20, dans lequel l'élément de guidage (8) ou chacun d'entre eux présente, perpendiculairement à la direction de déplacement (P), une coupe transversale sensiblement rectangulaire, le bord de découpage (18) ayant un contour différent de celle-ci, de sorte que la coupe transversale décrite ci-dessus entre complètement dans le contour décrit ci-dessus.

22. Appareil de découpage selon la revendication 21, dans lequel le contour décrit ci-dessus a une forme autre que celle d'un rectangle.

23. Appareil de fabrication de produits, comprenant une partie d'outil multiple pour simultanément façonner, au moins traiter, une série de produits et un appareil de découpage (1) selon l'une quelconque des revendications 17 à 20, les poinçons (2) étant aménagés l'un par rapport à l'autre de sorte que la position des éléments en feuille (30) découpées en cours d'utilisation corresponde à la position dans laquelle ils doivent être placés sur ou dans la partie d'outil (56).

24. Appareil de fabrication selon la revendication 23, dans lequel la partie d'outil (56) est une partie d'un moule à multiples injections, l'appareil (1) étant conçu de sorte qu'en cours d'utilisation, les étiquettes (30) puissent être transférées des ouvertures de découpage respectives (26) aux cavités de moule différentes (56) sans changement de position mutuel, avant la formation à l'intérieur de celles-ci d'une série de produits étiquetés dans le moule.
